# EUROPEAN PATENT APPLICATION

(11) **EP 1 526 423 A1**
(43) Date of publication of application: **27.04.2005**
(21) Application number: 03024759.7
(22) Date of filing: 20.10.2003
(51) Int. Cl.: G06F 1/00, G06F 17/30

(54) **A method of auditing an SAP user authorization system**

(71) Applicant: Bayer Aktiengesellschaft, 51368 Leverkusen (DE)
(72) Inventor: Ende, Stefan, 50825 Köln (DE)

(57) **Abstract**

The present invention relates to a method for auditing an SAP system and a computer having a central processing unit, an operating system, a data storage device, a display device, and a data input device, having loaded thereone a program enabled to perform a method for auditing an SAP system.

## Description

### BACKGROUND OF THE INVENTION

### Field of the invention

The present invention relates to a method for auditing an SAP system and a computer having a central processing unit, an operating system, a data storage device, a display device, and a data input device, having loaded thereone a program enabled to perform a method for auditing an SAP system.

### Discussion of the related art

Many functions performed by a business can be more effectively managed by using an enterprise resource planning system (ERP) to keep track of data associated with the function.

One of the most widely spread ERP's is a system called SAP, produced by SAP AG, Walldorf, Germany.

ERP's are presently used to keep track of business functions such as finances, taxes, inventory, payroll, planning. Some ERP's additionally allow sharing of data across organizational units, which can greatly improve information flow through a company.

This problem is complicated by the common use of distributed computing systems to implement ERP's within corporations. These distributed computing systems spread out computational and data storage resources across computer networks to a large number of geographically separate computing nodes and corporate functions. Consequently, a distributed computing system exposes sensitive data to greater risk of loss, unauthorized modification and unauthorized access than exists in a more centralized computing system.

Providing such sharing can therefore significantly complicate the process of ensuring security for the underlying database system.

Techniques presently used to provide security in ERP's (database systems) implement security by providing a security profile for each user of the database system. A security profile specifies certain actions (or activity tasks) that a user is allowed to perform on or with the database. Each user is usually assigned to a specific security profile, and each user is only allowed to perform the actions specified in the security profile.

SAP provides for certain basic profiles and user authorizations but is generally not designed to adequately reflect each customers specific organizational needs right off the shelf.

If the responsibility to create and assign security profiles is given to system administrators, a problem can arise if potentially hundreds of system administrators, located at different sites within a corporation, are charged with the task of creating and assigning security profiles to users. It becomes almost impossible to exercise control over security in such an environment without unreasonably hindering access to the database system. A system administrator in a small branch office knowingly or unknowingly can potentially give a low-level clerk access to unneeded corporate information.

Additionally, the task of managing security is presently in the hands of system administrators, who usually maintain system security by inputting cryptic commands into a database security system. Business managers, who are not familiar with this cryptic information, cannot readily oversee the work of security administrators. Thus, a critical oversight function is lacking.

Another way of implementing security profiles is sometimes implemented via some centralized system for security that determines what users or user groups should have access to a particular type of information.

US-B-6,005,571 describes a method for managing security in a database system. The method includes producing a plurality of task groups, the task groups including actions that may be performed on the database. Functional roles are created from these task groups, and a security profile for a user is created by assigning to the user at least one functional role. In one embodiment, the security profile for a user may only be created by assigning functional roles to users. Thus, users may only perform actions on the database that are dictated by defined task groups and functional roles. This allows database security to be controlled by controlling definitions of task groups and functional roles, without requiring exhaustive examination of security profiles for large numbers of individual users. The patentee mentions an audit security module that includes tools that allow a security administrator to determine what users are allowed to perform specific functions on the database without giving any specifics. It can be assumed that the audit security module is closely related to the regular audit trail/audit log functionalities of the regular ERP/SAP system.

The SAP authorization system is very complex and detailed. It consists of a huge amount of connected data, such as composite activity groups/roles, activity groups/roles, composite profiles and profiles containing authorizations and their objects, fields and values.

Due to this high complexity it is not easy to have an overview over users and their authorizations in order to check and monitor critical authorizations and accumulations of authorizations.

SAP itself provides an audit report of it's user authorization system (RSUSR002) for SAP R/3.

The central rights engine is usually not well equipped to detect business critical accumulation of rights. It may well be that critical combination of rights can accumulate in a single user profile with or without the knowledge of the respective user. A problem can also arise in the case of business or organizational changes without adjusting the authorization system accordingly. The actual situation of authorization setup will evolve more and more away from the original rights setup and it may well be that a critical combination of rights can accumulate in a single user or in composite activity groups/roles, activity groups/roles, composite profiles and profiles. Thus, to ensure a segregation of duties one should regularly monitor the authorization concept.

Therefore it is advisable for businesses to control or audit the security setup for their ERP from time to time.

Usually the control or the auditing of these individual authorizations is very time consuming and expensive, since it has to be performed by highly skilled professionals that take their personal time and control or audit certain individual rights.

By having persons perform that process it is inherently prone to human errors.

It would be an advantage to have an independent, fast, secure and reproducible way to audit the authorizations of individual users or composite activity groups/roles, activity groups/roles, composite profiles and profiles from time to time.

It would also be an advantage to have results of the developments of authorizations documented so as to follow and document managements efforts to aleviate an undesirable combination of authorizations in certain users and composite activity groups/roles, activity groups/roles, composite profiles and profiles.

It is also desirable to achieve the audit of the SAP user authorization concept without impeding the productive use of the ERP.

Another approach was taken by CSI Belgium (http://www.be-csi.com), last accessed October 7th, 2003) with a product called CSI AA (Authorization Auditor) that attempts to analyze the authorization concept by evaluating the actual user access profiles on the detailed level of data field values without disturbing the performance of the SAP system. This program works by downloading and importing at least 10 of the following 23 SAP tables (depending on the release of the CSI product and the release of SAP):

### ADRP, AGR_1252, AGR_AGRS, AGR_DEFINE, AGR_PROF, AGR_TCODES, AGR_TEXTS, AGR_USERS, T000, TOBJT, TSTCP, TSTCT, USR02, USR03, USR11, USR13, USR21, USREFUS, UST04, UST10C, UST10S and UST12

### SUMMARY OF THE INVENTION

The present invention is related to a method for auditing an SAP user authorization system by
a) downloading at least three SAP tables into a data evaluation software,
b) determining an audit set having at least three values of an object-field-combination connected by an 'AND',
c) calculating all the users, profiles/composite profiles, activity groups/roles and composite activity groups/roles whose authorizations are meeting the conditions defined in the audit set to obtain a data set, and
d) displaying the data set.

The present invention also relates to a computer having a central processing unit, an operating system, a data storage device, a display device and a data input device having loaded thereone a program enabled to perform a method for auditing an SAP system.

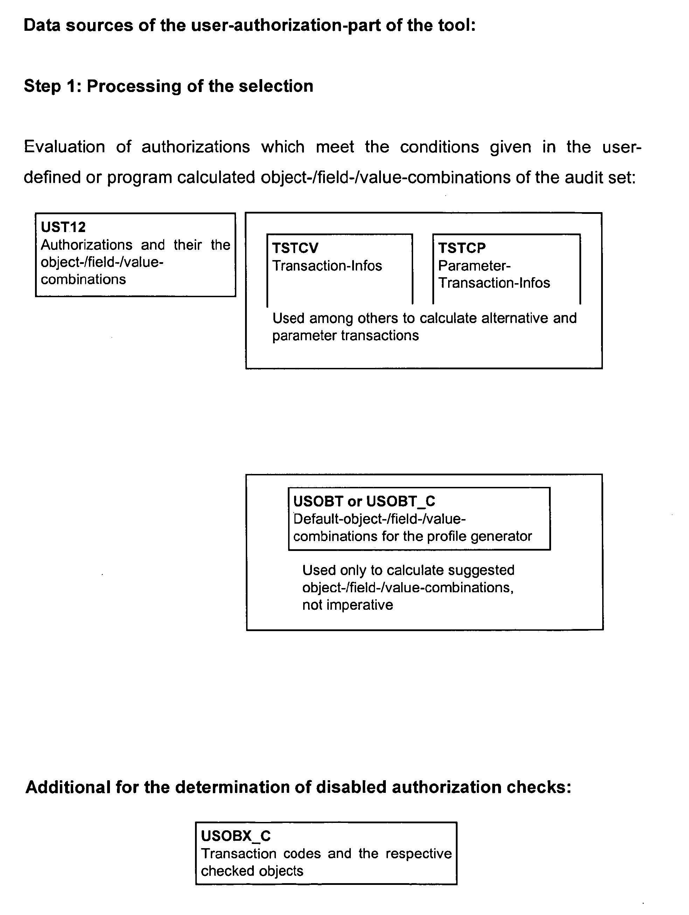

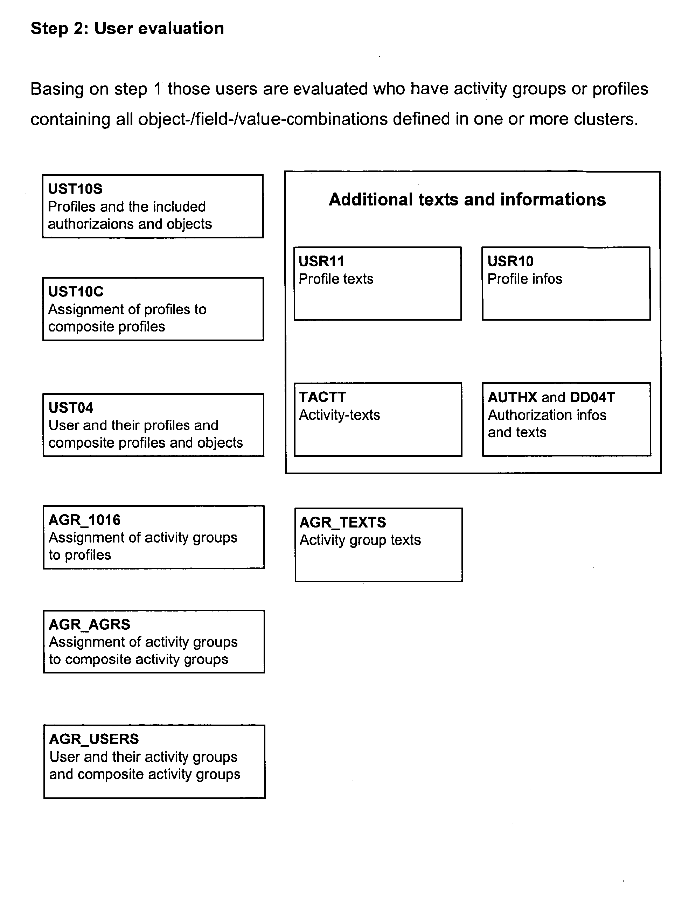

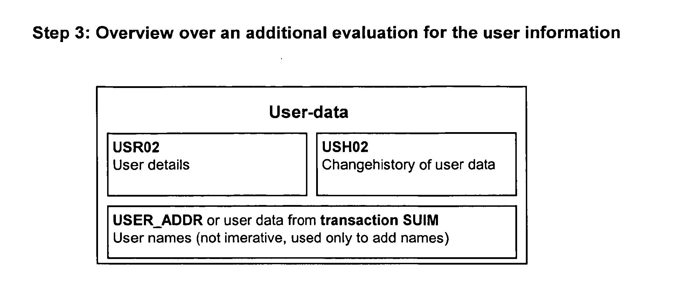

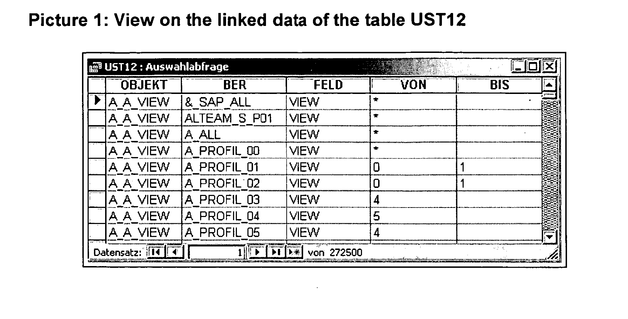

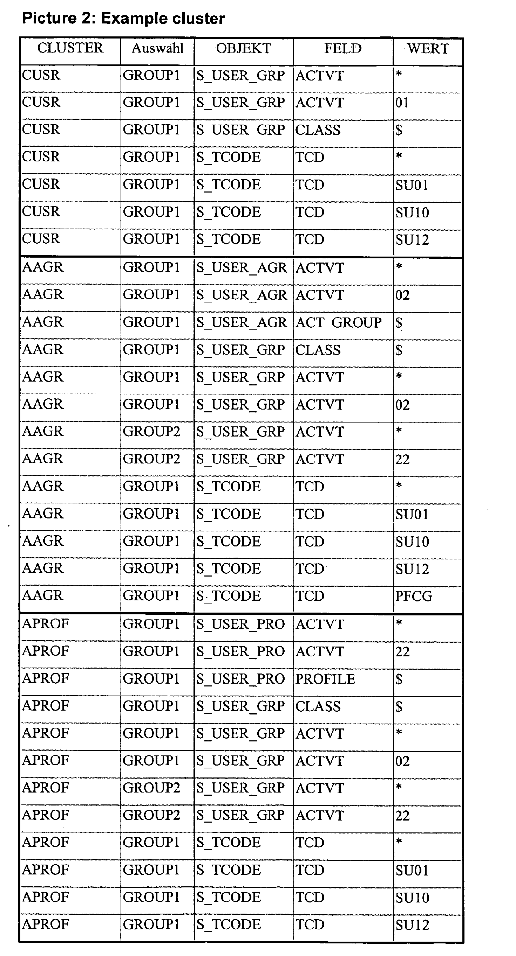

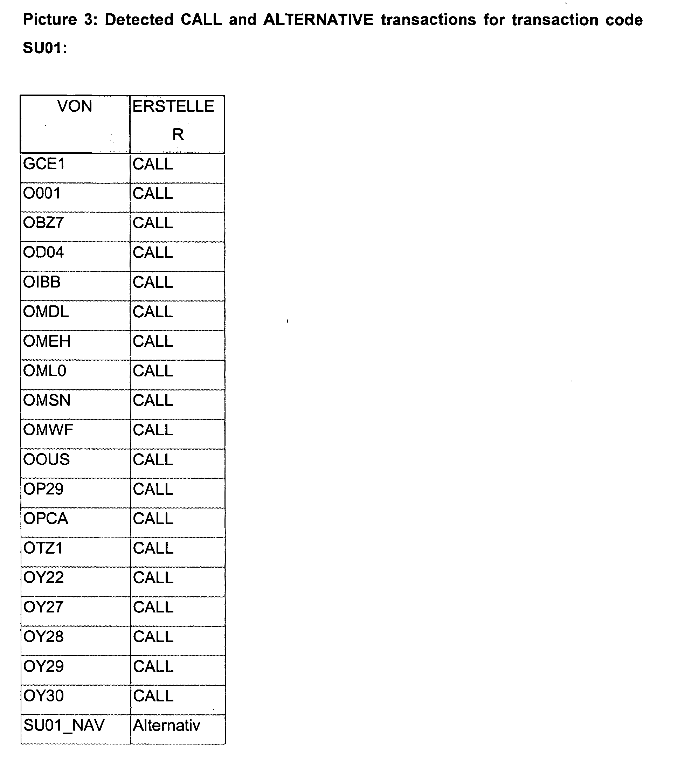

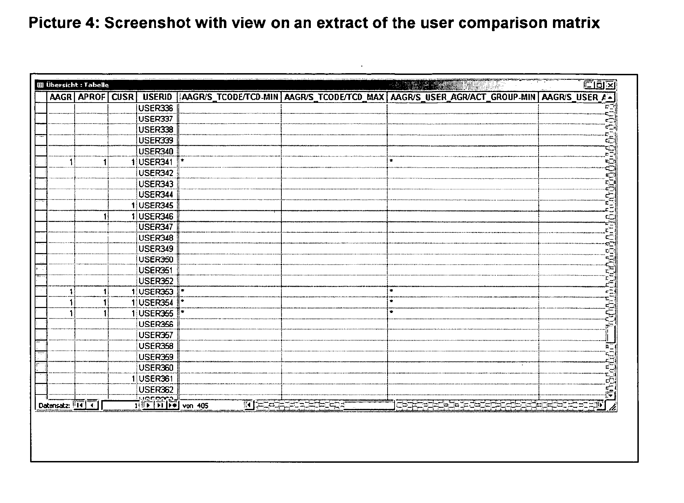

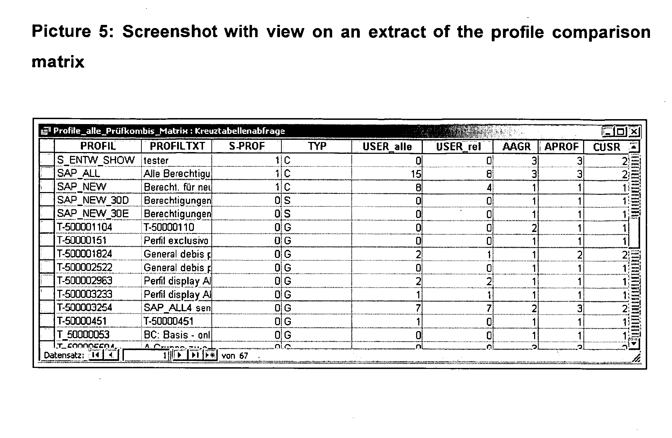

### BRIEF DESCRIPTION OF THE DRAWING

Step 1 gives an overview over the SAP tables used for processing of a selection. The evaluation of authorizations which meet the conditions given in the user-defined or program calculated object-/field-/value-combinations of the audit set.

Step 2 gives an overview over the SAP tables used for the user evaluation. Based on step 1 those users are evaluated who have composite activity groups/roles, activity groups/roles, composite profiles and profiles meeting the conditions of all object-/field-/value-combinations defined in one or more clusters. It also contains a schematic example of SAP tables that were combined to calculate a subtable within the data evaluation software. USR10, USR11 and UST10C will be combined to form the subtable 'PROFILE'.

Step 3 gives a further overview over SAP tables that allow for an additional evaluation for the user information. It is also an example of two SAP tables (USR02 ans USH02) that are combined to one subtable, named 'USER', in the data evaluation software.

### DETAILLED DESCRIPTION OF THE INVENTION

By data handling software the artisan will readily understand that there are several software programs on the market that will perform the required data handling operations. Examples include products by ORACLE, MICROSOFT, LOTUS and others. Specific examples include MICROSOFT ACCESS.

The artisan will readily understand the meaning of user. In one specific embodiment of the invention it is defined in the SAP handbook 'Authorizations Made Easy' (Release 4.6A/B), herein incorporated by reference.

The artisan will readily understand the meaning of profile. In one specific embodiment of the invention it is defined in the SAP handbook ,Authorizations Made Easy' (Release 4.6A/B), herein incorporated by reference.

The artisan will readily understand the meaning of composite profile. In one specific embodiment of the invention it is defined in the SAP handbook ,Authorizations Made Easy' (Release 4.A/B), herein incorporated by reference.

The artisan will readily understand the meaning of activity group/role. In one specific embodiment of the invention it is defined in the SAP handbook ,Authorizations Made Easy' (Release 4.A/B), herein incorporated by reference.

The artisan will readily understand the meaning of composite activity group/role. In one specific embodiment of the invention it is defined in the SAP handbook ,Authorizations Made Easy' (Release 4.A/B), herein incorporated by reference.

The artisan will readily understand the meaning of authorization. In one specific embodiment of the invention it is defined in the SAP handbook ,Authorizations Made Easy' (Release 4.A/B), herein incorporated by reference.

The artisan will readily understand the meaning of object-field-value. In one specific embodiment of the invention it is defined in the SAP handbook ,Authorizations Made Easy' (Release 4.A/B), herein incorporated by reference.

The definitions are also mentioned in the SAP HANDBUCH SICHERHEIT UND PRÜFUNG, Praxisorientierter Revisionsleitfaden für R/3™-Systeme, 3. Auflage, IDW-Verlag GmbH.

The artisan will readily understand the meaning of central processing unit, operating system, data storage device, display device and data input device.

Auditing an SAP user authorization system is not so much meant to mean creating or controlling logfiles as more to determine, if manual or automatic changes in the authorizations of users, profiles, composite profiles, activity groups/roles, or composite activity groups/roles lead to an unfavorable combination of authorizations for the company or parts of the company.

In one embodiment of the invention each SAP table is downloaded into a file. That enables the auditor or any interested person to perform subsequent audit operations on a different system or location. It also facilitates the comparison of several audits according to the invention at different times during business operations.

Although it is possible to obtain a data set with two SAP tables (for example a calculation using USR02 and USH02 could result in a list of all users including the date they were logged in the system the last time and were changed the last time) most calculations within the invention use three or more SAP tables.

In one embodiment of the invention the at least 3 SAP tables comprise UST12, TSTCV and TSTCP. One advantage of calculations performed with this set of SAP tables is indicated in the drawings (step 1). The calculation will show if an object-field-value combination or several object-field-value combinations are included in authorizations assigned to an existing user, but is not yet able to show a specific user to which it is assigned. Furthermore it is possible to determine if alternate transactions, call transactions and even call-alternate transactions do exist and, by the data evaluation software, include all transaction codes considered as similar into the evaluation. In this embodiment the audit quality is anhanced. In comparison with manually evaluating these transactions the audit time may be considerably shortened. The functionality was unknown to the auditing community before the current invention.

Alternate transaction in the course of this application preferably describes a transaction that triggers the same program and/or dynpro than the audited transaction. Call transaction in the course of this application preferably describes a transaction that triggers another transaction. It usually describes a transaction that is triggered by an audited transaction, but it is also possible that the audited transaction is the triggered transaction. It follows that a call-alternate transaction usually describes a transaction that triggers another transaction that leads to the same program and/or dynpro than the triggered transaction.

In one embodiment of the invention at least 4 SAP tables are downloaded.

In one embodiment of the invention the at least 4 SAP tables comprise UST12, TSTCV, TSTCP and USOBX_C. One advantage of calculations performed with this set of SAP tables is that it can be evaluated whether authorization checks for the audited object-field-value combinations as defined in the audit set were accidentally or purposefully disabled by an authorized or unauthorized administrator.

In one embodiment of the invention the at least 4 SAP tables comprise UST12, TSTCV, TSTCP and USOBT_C. That enables the user to perform a more sophisticated audit, than downloading only 3 SAP tables.The table USOBT_C can in some cases be substituted by the table USOBT. By including the USOBT_C or USOBT-table the calculation enables the auditor readily to calculate the object-field-value combinations necessary to be able to execute a specific transaction and whether these object-field-value combinations are included in authorizations assigned to users. Thus, an audit set can be calculated and evaluated by the data evaluation software. Here it is also possible to determine alternate transactions, call transactions and call-alternate transactions and, by the data evaluation software, to include all transaction codes considered as similar into the evaluation.

In one embodiment of the invention at least 5 SAP tables are downloaded.

In one embodiment of the invention the at least 5 SAP tables comprise UST12, TSTCV, TSTCP and USOBT_C and USOBX_C. One advantage of calculations performed with this set of SAP tables is it can be evaluated whether authorization checks for the audited object-field-value combinations were accidentally or purposefully disabled by an authorized or unauthorized administrator.

In one embodiment of the invention at least 15 SAP tables are downloaded. In one embodiment of the invention the at least 15 SAP tables comprise the above mentioned tables UST12, TSTCV, TSTCP and the tables UST10S, UST10C, UST04, AGR_1016, AGR_AGRS, AGR_USERS, USR11, USR10, TACTT, AUTHX, DD04T and AGR_TEXTS.

By using this set of tables it is possible to show the users to which the object-field-value combinations as defined in the audit set are assigned as well as all respective authorization details. It is also possible to see the profiles or composite profiles and/or activity groups/roles or composite activity groups/roles meeting the conditions of at least one of these given object-field-value combinations.

In one embodiment of the invention at least 16 SAP tables are downloaded. In one embodiment of the invention the at least 16 SAP tables comprise the above mentioned 15 tables and the table USOBX_C. This makes it possible also to evaluate which authorization checks for the audited object-field-value combinations as defined in the audit set were accidentally or purposefully disabled by an authorized or unauthorized administrator.

In another embodiment of the invention at least 16 SAP tables are downloaded. In one embodiment of the invention the at least 16 SAP tables comprise the above mentioned 15 tables and the table USOBT_C. This makes it also possible to calculate the audit set with the respective object-field-value combinations necessary to be able to execute a specific transaction and to evaluate this audit set by the data evaluation software.

In another embodiment of the invention at least 17 SAP tables are downloaded. In one embodiment of the invention the at least 17 SAP tables comprise all the above mentioned tables (UST12, TSTCV, TSTCP, USOBT_C, USOBX_C, UST10S, UST10C, UST04, AGR_1016, AGR_AGRS, AGR_USERS, USR11, USR10, TACTT, AUTHX, DD04T and AGR_TEXTS). This makes it possible to perform all evaluations as described above.

There are additional tables that are needed to obtain additional informations e.g. user-details like the last date of login (table USR02) or text informations like the object texts (table TOBJT) or informations needed for further evaluations like the reconciliation of User-IDs with the data of Human Resources (PA-tables) in order to see User-IDs belonging to persons which are no longer employed.

Therefore, in one embodiment of the invention at least 25 SAP tables are downloaded. In one embodiment of the invention the at least 25 SAP tables comprise AUTHX, DD04T, USER_ADDR, USH02, USR02, USOBT_C, USOBX_C, USR10, USR11, UST04, UST10C, UST10S, UST12, AGR_AGRS, AGR_1016, AGR_TEXTS, AGR_USERS, TACTT, TOBJT, TSTCA, TSTCV, TSTCP, PA0000, PA0002 and PA0105.

In one embodiment of the invention the tables are downloaded and imported into the data evaluation software all at once.

In one embodiment of the invention the tables are downloaded and imported into the data evaluation software consecutively with a possibility of a manual control of each imported table.

This a very good variation of the invention to avoid errors occuring from the download and import and thus can save time during the audit.

It is one advantage of that embodiment that the amount of data evaluated can be reduced from the amount originally imported from the SAP tables.

In one embodiment of the invention the data evaluation software is a database system different than SAP. That enables the auditor to perform calculations in a different location than the audited company or the customer. Another advantage is the guaranteed consistency of the original downloaded data, that will not likely be altered over the course of an audit or in between an audit and a repeat audit.

In one embodiment of the invention the data evaluation software is Microsoft ACCESS.

It is a well known program, its main advantages for this application being compatibility, reliability, accessability and various export functionalities.

In one embodiment of the invention the data evaluation software is using the database engine and many program elements of Microsoft ACCESS like tables, queries, forms, macros and others.

In one embodiment of the invention the database file in the data evaluation software (without the imported SAP tables) comprises less than 10 MB of data, preferably less than 5 MB, more preferably less than 2 MB. It is readily understood that it is always an objective to reduce memory usage. It is surprising though that the method of the invention can be performed on that little memory and with such high efficiency.

In one embodiment of the invention the audit set has more than 15, preferably 30, more preferably more than 100, and most preferably 1000 object-field-value-combinations. SAP offers more than 2.000 object-field combinations. Depending on the organizational business structure of a company using SAP it is easily possible to have hundreds or even thousands of single field-values for specific objects if only because the object S_TCODE, field TCD has approx. 20.000 possible values (one per transaction code). Even if not all of them are used and/or filled, programs of the state of the art might be in trouble, especially if the number of users exceeds 100, 1000, or even 10000 users.

In one embodiment of the invention the audited SAP user authorization system comprises more than 10, preferably 100, more preferably 1000, and most preferably 10000 users. The high number of object-field-value-combinations also allows a highly specific audit of complex organizational business structures that are sometimes encountered in large multinational firms.

In one embodiment of the invention the audit set comprises the evaluation of more than three authorization-objects, preferably more than 15 SAP-authorization objects, more preferably more than 16 SAP-authorization objects, more preferably more than 30 SAP-authorization objects and most preferably more than 100 SAP-authorization objects. SAP can not evaluate more than three authorization-objects. The higher number of objects allows a highly specific audit of complex authorizations. This is important because many programs require authorizations containing specific field-values of more than three objects as one is already needed for the transaction code (object S_TCODE). The SAP-program RSUSR002 can only evaluate up to three objects.

In one embodiment of the invention the audit set has more than two values connected by an 'OR' per object field. That is also an improvement over current systems of the state of the art like the SAP-report RSUSR002.

In one embodiment of the invention the audit set has at least two clusters of object-field-value combinations. A cluster is a section in an audit set used to divide one or more object-field-value combinations in order to evaluate them separately. This allows the auditor to audit several object-field-value combinations in parallel but enables the auditor at the same time to analyze the audit result for each cluster separately. In one embodiment of the invention within a cluster the object-field-value combinations can be identified by adding an addditional parameter (AUSWAHL) that enables the auditor to perform 'AND' or 'OR' calculations regarding the values of an object-field combination. The current program used by the inventor defines that the same value for the parameter defines an 'OR' analysis whereas a different parameter within a cluster defines an 'AND' analysis.

In one embodiment of the invention the audit set has at least one value containing a variable. This is a very important possibility of the invention. The variable enables the auditor to look for any value given to users for the respective defined object-field-combinations. This reduces the number of calculations sometimes by an order of magnitude or more. It is readily apparent that this is highly cost efficient. Programs of the state of the art can not evaluate variable field-values.

In another embodiment of the invention the audit set has a set of more than two different values for the same object-field combination connected by an 'AND'. For each of these values there can be entered more than two other values connected by an 'OR'. To the best of the inventor's knowledge, no system in the state of the art can do that. Therefore the present invention is more specific and versatile than other audit methods.

In one embodiment of the invention the determination of the audit set comprises a step writing authorization information of at least part of the audit set by a user having knowledge of the SAP user authorization system.

In one embodiment of the invention the determination of the audit set comprises a step writing of at least part of the audit set by a computer program using the SAP default values of the USOBT_C table. Based upon this table the audit set can be generated by entering only one transaction code and determining the respective object-field-value combinations by the data evaluation software.

In one embodiment of the invention the object-field-value-combinations are structured by having a cluster information for each object-field-value-combination. The object-field-value combinations can have an additional parameter (Auswahl) to further structure the audit set. This parameter is needed to define that certain values of the same object-field-combination should be connected by an 'AND' or an 'OR'.

In one embodiment of the invention the audit set has more than two clusters, preferably more than 5, more preferably more than 15, and most preferably more than 50 clusters.

In one embodiment of the invention one cluster is combined preferably according to a critical task like a transaction/program or a critical combination of transactions/programs in SAP. This audit set or this part of an audit set can be defined once and be used for all further audits. It is also possible to save the entire audit set or the clusters in other programs like MS Excel and to copy them into the data evaluation software. It will be readily apparent to those skilled in the art, that this is a useful feature of this embodiment of the invention, since it can incorporate knowledge aquired from experienced auditors over time.

In one embodiment of the invention the audit set with more than two clusters is calculated in one run, whereby the results can be displayed together or separately.

In one embodiment of the invention profiles/composite profiles as well as activity groups/roles and composite activity groups/roles will be displayed that only fulfill at least the defined field-values of one of the objects as defined in the audit set. That gives the advantage of evaluating critical profiles/composite profiles as well as activity groups/roles and composite activity groups/roles containing critical authorizations or critical combinations of them.

In one embodiment of the invention the audit set is a table comprising a row defining a cluster, a row defining an SAP-authorization object, a row defining the fields of the objects and a row defining the values for these fields.

In one embodiment of the invention the audit set is a table comprising a row defining a parameter, a row defining an SAP-authorization object, a row defining the fields of the objects and a row defining the values for these fields.

In one embodiment of the invention the audit set is a table comprising a row defining a cluster, a row defining a parameter (Auswahl), a row defining an SAP-authorization object, a row defining the fields of the objects and a row defining the values for these fields.

The parameter (Auswahl) row can be the second row. As described above, in one embodiment of the invention the audit set comprises a second row may be defining logical 'AND' or 'OR' combinations regarding the values of an object-field combination.

In one embodiment of the invention the method includes the step of calculating at least one alternate transaction code or several transaction codes and, by the data evaluation software, including an optional transaction code or transaction codes regarded as similar in the calculation in addition to those entered in the audit set.

In one embodiment of the invention the method includes the step of calculating at least one call transaction code or several call transaction codes and, by the data evaluation software, including an optional transaction code or transaction codes regarded as similar in the calculation in addition to those entered in the audit set.

In one embodiment of the invention the method includes the step of calculating at least one call-alternate transaction code or several call-alternate transaction codes and, by the data evaluation software, including an optional transaction code or transaction codes regarded as similar in the calculation in addition to those entered in the audit set.

In one embodiment of the invention at least one subtable is calculated from the SAP tables.

An example includes a subtable calculated from the USR02 und USH02 tables to show user details.

In one embodiment of the invention at least one composite subtable is calculated from at least one SAP table and the calculated subtable.

In one embodiment of the invention the data set of results is displayed as a matrix.

In one embodiment of the invention the matrix is a comparison matrix displaying all the users, having an indicator (row) with respect to the fulfillment of the audit set clusters and ordered according to a dataset identifier. An example of this dataset identifier may be the user name and an example of the ordering may include alphabetical ordering. This feature is useful to detect critical combinations of authorizations by comparing the cluster results. It is also useful to join different evaluations performed at a different time.

In one embodiment of the invention the matrix is a result matrix displaying only the users that fulfill the audit set.

In one embodiment of the invention all the users are displayed as a table comprising additional information on the minimum and maximum field-values of the objects defined in the audit set clusters in the form of a min-max column. This is a fast way to exclude possible critical combinations. In case a) that a user has a critical financial authorization I (for example maintaining vendor master data) for company code 1, 3, 4 and 7 and a certain other critical finacial authorization II (for example entering of invoices) for company codes 9, 10, 11, 14, and 15 the min-max-analysis will immediately be sufficient to show that there is no overlap between authorization I (1; 7) and II (9; 15).

The sitution changes somewhat in case b) if in addition to the above mentioned case the authorization of the user includes for transaction I also the company code 17. Although there is no authorization problem in the system so far the min-max analysis will not be sufficient to immediately prove that, i.e. the results will show authorization I (1; 17) and II (9; 15). In a third case c) the user might obtain authorization I for business area 10. Although there is an authorization problem in the system so far the min-max analysis will not be sufficient to immediately prove that, i.e. the results will show authorization I (1; 10) and II (9; 15).

In one embodiment of the invention an analysis is provided to evaluate whether users have critical combinations of authorizations whose respective object-field-values are matching. In one embodiment of the invention these matches are shown in a detailed list. In another embodiment of the invention a comparison matrix displaying all the users, having an indicator (row) with respect to the evaluated authorizations whether they match. In one embodiment of the invention this matrix contains also an indicator (row) showing the details of the match like the number of values matching.

In one embodiment of the invention displaying all the users as a table comprising additional information on the object field value combination in the form of an identifier with respect to the status of the user (blocked, validity, last login date) .

In one embodiment of the invention it is possible to save and/or export all results into another spreadsheet- or database-file This is an advantage, because it can be performed by an independent auditor without handing out the program.

In one embodiment of the invention the results of an audit performed on a first specific day can be compared with the results of an audit later than the first specific day.

In many auditing procedures it may be in the best interest of the audited company or the customer, if the implementation of the recommendations of a first audit will be re-audited in a later evaluation. It is a useful feature of the present invention that the data of a first audit may be stored on a first day and compared with the results of a day different from the first day, because alterations to the systems will not affect or even change results obtained on the first day.

The invention also relates to a computer having a central processing unit, an operating system, a data storage device, a display device and a data input device having loaded thereone a program enabled to perform a method for auditing an SAP.

In one embodiment of the invention the user-data can be reconciled with the SAP-Human Resource-data or imported personnel-data from another system than SAP. This reconciliation shows users which are not or no longer employees of the company.

In one embodiment of the invention the user names are compared in order to detect persons having multiple User-IDs. This evaluation compares not only the exact name but also identical substrings of at least 3, preferably 5 signs of the beginning or end of the first or last name.

In one embodiment of the invention multiple activity groups/roles, composite activity groups/roles or composite profiles can be detected.

In one embodiment of the invention the system profile parameters of the SAP-system can be analyzed and compared with suggested default-values whereby these suggested-default-values can be maintained by the auditor. This enables the auditor to check, whether the security-relevant settings of system profile parameters are meeting the requirements.

In this example the data-tables were downloaded from SAP/R3, Release 4.0 b, b and saved as text-files. They were linked with the data evaluation software using pre-defined import-links. The data evaluation software used is a product by Bayer AG, Germany called "Authorization Audit Tool".

All linked tables can be seen in the data evaluation software to check whether the download was complete and correct.

In one example the SAP table UST12 was checked in the data evaluation software as can be seen in picture 1.

To have a faster access some data from the SAP tables were combined into subtables which were used as basis for further evaluations. In the current example USR10, USR11 and UST10C were combined to form the subtable 'PROFILE'. The two SAP tables USH02 and USR02 were combined to one subtable, named 'USER', in the data evaluation software.

The creation of the subtables was performed all at once, but in other examples it was performed consecutively with a manual control of each imported table.

In this example an audit set was defined comprising three clusters of object-field-value-combinations, one giving the authorization to create users (CUSR), one to assign activity groups to users (AAGR) and one to assign profiles to users (APROF) as can be seen in picture 2.

The values of object-field combinations having the same parameter (row AUSWAHL) were calculated as a logical 'OR'-condition and those having different parameters (here e.g. GROUP1 and GROUP2) ) were calculated as a logical ,AND'-condition, e.g. the values of the object-field combination S_USER_GRP, ACTVT in the clusters AAGR and APROF are defined as follows: ('02' OR'*') AND ('22' OR'*').

The $-sign is used to indicate a variable, which means that all object-field-combinations containing any value are meeting this condition.

The data evaluation software also evaluated call, alternative and call-alternative transactions. For the transaction code SU01 the following transaction codes were detected and considered as similar: GCE1 (CALL), O001 (CALL), OBZ7 (CALL), OD04 (CALL), OIBB (CALL), OMDL (CALL), OMEH (CALL), OML0 (CALL), OMSN (CALL), OMWF (CALL), OOUS (CALL), OP29 (CALL), OPCA (CALL), OTZ1 (CALL), OY22 (CALL), OY27 (CALL), OY28 (CALL), OY29 (CALL), OY30 (CALL), SU01_NAV (alternative).

The data evaluation software included these detected transaction codes automatically into the further calculations.

The results of this calculation were shown in detail or as a matrix displaying all the users, having an indicator (row) with respect to the fulfillment of the audit set clusters. Picture 4 shows a screenshot of a part of the user comparison matrix

In the same way the users were calculated, the profiles or composite profiles as well as activity groups/roles or composite activity groups/roles were evaluated.

The screenshot in pictue 5 shows a part of the matrix of the profile evaluation containing all those profiles fulfilling at least the conditions of one object as defined in a cluster of the audit set. There is also shown to how many audit-set-defined-objects the requirements were met as well as all the users and all relevant users (valid, not blocked dialogue users) to whom the respective profiles were assigned to.

## Claims

1. A method for auditing an SAP user authorization system comprising the steps of
a) downloading at least three SAP tables into a data evaluation software,
b) determining an audit set having at least three values of an object-field-combination connected by an 'AND',
c) calculating all the users, profiles/composite profiles, activity groups/roles and composite activity groups/roles whose authorizations are meeting the conditions defined in the audit set to obtain a data set, and
d) displaying the data set.

2. The method of claim 1, wherein the at least 3 SAP tables comprise UST12, TSTCV and TSTCP.

3. The method of claim 1, comprising a) downloading at least 4 SAP tables, preferably comprising USOBT_C, USOBT, or USOBX_C.

4. The method of claim 1, comprising a) downloading at least 5 SAP tables, preferably comprising USOBX_C and USOBT_C or USOBT.

5. The method of claim 1, comprising a) downloading at least 15 SAP tables, preferably comprising UST10S, UST10C, UST04, AGR_1016, AGR_AGRS, AGR_USERS, USR11, USR10, TACTT, AUTHX, DD04T and AGR_TEXTS.

6. The method of claim 5, comprising a) downloading at least 16 SAP tables, preferably comprising USOBT_C, USOBT or USOBX_C.

7. The method of claim 5, comprising a) downloading at least 17 SAP tables, preferably comprising USOBX_C and USOBT_C or USOBT.

8. The method of claim 7, comprising a) downloading at least 25 SAP tables, preferably comprising USR02, USH02, USER_ADDR, TOBJT, TSTCA, PA0000, PA0002 and PA0105.

9. The method of claim 1, wherein the tables are downloaded into the evaluation software all at once.

10. The method of claim 1, wherein the tables are downloaded into the evaluation software consecutively with a possibility of a manual control of each downloaded data base.

11. The method of claim 1, wherein the data evaluation software is a database system different than SAP.

12. The method of claim 11, wherein the data evaluation software is Microsoft ACCESS.

13. The method of claim 12, wherein the database file in the data evaluation software comprises less than 10 MB of data, preferably less than 5 MB of data, more preferably less than 2 MB of data.

14. The method of claim 1, wherein the audit set comprises more than 15 object-field-value-combinations, preferably more than 30 object-field-value-combinations, more preferably more than 100 object-field-value-combinations, and most preferably more than 1.000 object-field-value-combinations.

15. The method of claim 1, wherein the audit set comprises more than three SAP-authorization objects, preferably more than 15 SAP-authorization objects, more preferably more than 16 SAP-authorization objects, more preferably more than 30 SAP-authorization objects and most preferably more than 100 SAP-authorization objects.

16. The method of claim 1, wherein the audit set comprises at least one field-value of an SAP-authorization object containing a variable.

17. The method of claim 1, wherein the audit set has field values of at least four objects.

18. The method of claim 1, wherein the audit set has more than two values connected by an 'OR' per object field.

19. The method of claim 1, wherein b) the determination of the audit set comprises a step of b1) writing authorization information of at least part of the audit set by a user having knowledge of the SAP user authorization system.

20. The method of claim 19, wherein the determined audit set can be copied and pasted electronically into a data evaluation software and used for another audit.

21. The method of claim 1, wherein b) the determination of the audit set comprises a step of b2) writing authorization information of at least part of the audit set by a computer program according to the rules of the SAP user authorization system using the USOBT_C or the USOBT table.

22. The method of claim 1, wherein the object-field-value-combinations are structured by having at least one cluster, preferably more than two clusters, more preferably more than 10 clusters, and most preferably more than 50 clusters, containing object-field-value-combinations which are evaluated separately.

23. The method of claim 22, wherein the audit set has more than 15 transaction codes per defined cluster.

24. The method of claim 22, wherein one cluster is combined according to a critical task/program/transaction or a combination of critical tasks/programs/transactions in SAP.

25. The method of claim 1, wherein the audit set has at least two clusters of object-filed-value combinations, which are calculated in one run and the data set is displayed together or separately.

26. The method of claim 1, wherin a parameter is defined to structure the values of an object-field-combination defined in the audit set by having at least one logical 'AND' or 'OR' combinations per object-field-combination, preferably at least 15 logical 'AND' or 'OR' combinations per object-field-combination, more preferably at least 50 logical 'AND' or 'OR' combinations per object-field-combination, most preferably at least 100 logical 'AND' or 'OR' combinations per object-field-combination.

27. The method of claim 1, wherein the audit set is a table comprising a row defining a SAP-authorization object, a row defining a SAP-field, a row defining a SAP-value and an additional row defining a parameter to structure the values of an object-field-combination by having 'AND' or 'OR' combinations.

28. The method of claim 1, wherein the audit set is a table comprising a row i) defining a SAP-authorization object, a row ii) defining a SAP-field and a row iii) defining a SAP-value and one or two additional rows defining iv) a parameter and/or v) a cluster to divide one or more object-field-value combinations in order to evaluate them separately.

29. The method of claim 1, comprising the step of calculating alternate, call- and call-alternate transactions and, by the data evaluation software, including those transactions considered as similar into the evaluation.

30. The method of claim 1, comprising calculating at least one subtable from at least two of the SAP tables.

31. The method of claim 30, comprising calculation at least one composite subtable from at least one SAP table and the calculated subtable.

32. The method of claim 1, wherein the audit set has at least two clusters and the data set displays the results of the clusters in one table including all details regarding the evaluated users meeting the conditions of the audit set and their profiles/composite profiles, activity groups/roles and composite activity groups/roles such as the evaluated authorizations and the respective object-field-value combinations meeting the conditions defined in the audit set.

33. The method of claim 1, wherein the audit set has at least two clusters and the data set displays the results of the clusters in one table showing the authorizations of the evaluated profiles or composite profiles meeting the field-value conditions of at least one object as defined in the audit set.

34. The method of claim 1, wherein the audit set has at least two clusters and the data set displays the results of the clusters in one table showing the authorizations of the evaluated activity groups/roles or composite activity groups/roles meeting the field-value conditions of at least one object as defined in the audit set.

35. The method of claim 32, 33 or 34, comprising displaying the results as a matrix.

36. The method of claim 35, wherein the matrix is a comparison matrix displaying all the users, having an indicator with respect to the fullfillment of the audit set and ordered according to a dataset identifier.

37. The method of claim 35, wherein the matrix is a result matrix displaying only the users that fulfill the audit set or a part (cluster) of the audit set.

38. The method of claim 1, comprising d) displaying all the users as a table comprising additional information on the object-field-values in the form of a min-max column.

39. The method of claim 1, comprising d) displaying all the users as a table comprising additional information in the form of an identifier with respect to the company status of the user.

40. The method of claim 1, further comprising e) comparing the calculated users with a preset user data list.

41. The method of claim 1 wherein the SAP user authorization system comprises more than 10, preferably 100, more preferably 1000, and most preferably 10000 users.

42. The method of claim 1, further comprising the step of saving the data set on a first specific day.

43. The method of claim 42, further comprising the step of saving the data set on a day later than the first specific day.

44. The method of claim 43, further comprising the step of comparing the results of the data set stored on the first specific day with the data set on the day later than the first specific day.

45. A computer having a central processing unit, a data storage device, a display device and a data input device having loaded thereone a program enabled to perform a method for auditing an SAP.

46. The computer of claim 45 having a printer device.

47. A method of auditing an SAP user authorization system comprising the step of a company ordering an external auditor or consultant to perform the steps of
a) downloading at least three SAP tables into a data evaluation software,
b) determining an audit set having at least two values of an object-field-combination connected by an 'AND',
c) calculating all the users, profiles, composite profiles, activity groups/roles, and/or composite activity groups/roles containing the audit set in the authorizations to obtain a data set, and
d) displaying the data set.

48. A carrier having recorded thereon a program to enable a computer to perform a method of auditing an SAP user authorization system comprising the steps of
a) downloading at least three SAP tables into a data evaluation software,
b) determining an audit set having at least two values of an object-field-combination connected by an 'AND',
c) calculating all the users, profiles, composite profiles, activity groups/roles, and/or composite activity groups/roles containing the audit set in the authorizations to obtain a data set, and
d) displaying the data set

49. A method for auditing an SAP user authorization system comprising the steps of
A) downloading at least three SAP tables into a data evaluation software, and
B) determining an audit set by calculating by a data evaluation software at least one critical combination from a given transaction code.

50. A method for auditing an SAP user authorization system comprising the steps of
a) downloading at least three SAP tables into a data evaluation software,
b) determining an audit set having at least one object-field-combination comprising a variable value,
c) calculating all the users, profiles/composite profiles, activity groups/roles and composite activity groups/roles whose authorizations are meeting the conditions defined in the audit set to obtain a data set, and
d) displaying the data set.

51. A method for auditing an SAP user authorization system comprising the steps of
a) downloading at least three SAP tables into a data evaluation software,
b) determining an audit set having at least two clusters of object-field-value combinations,
c) calculating all the users, profiles/composite profiles, activity groups/roles and composite activity groups/roles whose authorizations are meeting the conditions defined in each cluster of the audit set to obtain a data set, and
d) displaying the data set.

52. The method of claim 51, wherein the results of each cluster can be compared whether they are matching on an object-field value level.

53. The method of claim 52, wherein the results of each cluster can be compared whether they are matching on an object-field value level and showing the amount of matches as well as the type of matches.
